# EUROPEAN PATENT APPLICATION

(11) **EP 1 856 985 A2**
(43) Date of publication of application: **21.11.2007**
(21) Application number: 07009984.1
(22) Date of filing: 18.05.2007
(51) Int. Cl.: A23G 9/50, A23G 3/56

(54) **Light-generating edible product**

(30) Priority: 17.05.2006 US 801155 P
(71) Applicant: Home Focus Development Limited, Road Town, Tortola (VG)
(72) Inventor: Andersen, Jacob Ranis Stokholm, Hong Kong (CN)
(74) Representative: Beier, Ralph

(57) **Abstract**

A light generating edible product is described. The product comprises an edible portion, some or all of which is contained within a dispenser which comprises a light generating device. The light generating device can be activated directly by the user, or can be activated by the actions of the user in dispensing the edible portion.

## Description

### Field of the Invention

The invention relates to the field of edible products, and particularly to a confectionary product, that produces light for example when the product is dispensed.

### Background

Food products such as candy are available in a variety of shapes, sizes and colors. However, apart from the differences in type or flavor, very little exists to differentiate one confection or other food from another. What is needed is a way to add amusement qualities and value to candy and foods which are marketed to consumers, and to provide an additional incentive for the consumer to buy the food product.

Confections which include a light have been developed to induce consumers to purchase the product. However, the light is activated by the consumer independently from the consumption or dispensation of the candy. Although initially intriguing, the consumer quickly loses interest in the lighting function once the consumer begins to consume the product.

What is needed, therefore, is a food product which has an enhanced amusement quality that can hold the interest of the consumer throughout the dispensation and consumption of the product. Desirably, the enhanced amusement quality will induce consumers to initially purchase the product, and produce repeated sales.

### Summary of the Invention

This invention provides a food product which is associated with a dispenser comprising a device for generating light. The light is generated when activated by the user or when the food product is dispensed.

The invention also provides a method of marketing a food product. The marketing method involves providing an edible portion in combination with a dispenser comprising a light generating device. These elements are combined to create a light generating edible product, which can then be distributed to a user. The method can further comprise the steps of instructing the user in how to activate the light generating portion upon dispensation of the edible portion, or packaging the light generating food product with confections, toys, novelties or the like.

### Brief Description of the Drawings

For the purpose of illustrating the invention, there are shown in the drawings forms which are exemplary; it being understood, that this invention is not limited to the precise arrangements and instrumentalities shown.

Fig. 1 shows a longitudinal cross-sectional view of an exemplary light generating edible product of the invention.

Figs. 2A and 2B show a longitudinal cross-sectional view of a further exemplary light generating edible product of the invention.

Figs. 3A and 3B show a side view of a further exemplary light generating edible product of the invention.

### Detailed Description

The light generating edible product of the invention comprises an edible portion, some or all of which is contained within a dispenser. The dispenser comprises a light generating device.

The edible portion can comprise any type of food, preferably of the type typically marketed to consumers in discrete portions to be consumed. For example, the edible portion can comprise meats (particularly dried meats); cheeses; breads and crackers, including those made wholly or partially from wheat, corn, rice, oats and flax; tofu and other vegetable curds; fruits and vegetables and portions thereof; ice creams, sorbets, gelati, water ice, popsicles and the like; baked or fried snacks such as potato chips and corn chips; confections and water and other potable liquids, including juices, sodas, sports drinks, fortified waters, flavored and colored waters and alcoholic beverages. The light generating edible product is particularly suitable for use with confections.

Suitable confections include candy, cake, cookies and the like, which can be contained within a dispenser. Suitable confections for use in the invention include hard candies; mints; cough drops and throat drops; lozenges; gum; lollipop heads; low boiled candy; hard boiled candy; coated candy; rock candy; milk, dark and white chocolate; taffy; powdered candies; edible films; jelly beans; liquid candy, candy gel, and candy foam. Such confections, and techniques for producing them, shaping them and associating them with the dispenser are within the skill in the art.

The edible portion is supported by the dispenser. As used herein, an edible portion which is "supported by the dispenser" means that the edible portion is held, carried or otherwise sustained by the dispenser. For example, the dispenser can comprise a stick or post, and the edible portion can comprise a lollipop head. Alternatively, the dispenser can comprise a flat or convex surface that supports the edible portion. In other embodiments, the dispenser comprises a reservoir for liquid candy, candy gel or candy foam or potable liquids such as water. In still other embodiments, the dispenser comprised coaxial tubes which dispense the edible portion when the tubes are twisted in opposite directions relative to each other, much like a cosmetic lipstick dispenser. Thus, the edible portion can be located on the outside of the dispenser, inside the dispenser, or can extend through the dispenser and is carried thereby.

The edible portion can be associated with the dispenser by means which are apparent to those skilled in the art; for example with mechanical means, snap fits, bayonet fits, friction fits and the like. In one embodiment, the edible portion is associated with the dispenser by forming part of the edible portion around a protrusion, or inside of a receptacle, in the dispenser.

At least one light generating device is also supported by the dispenser. The light generating device can comprise any electronic light generator such as are known in the art. Suitable light generators include devices comprising an incandescent of fluorescent light bulb, or printed circuit board ("PCB") connected to a light emitting diode (LED), in which the PCB controls the frequency, pattern and intensity of the generated light. It is contemplated that the electronic light generating device can be programmable or capable of transmitting and receiving and/or storing electronic data, such as computer program code for generating sounds.

It is understood that the light generating device is capable of producing monochromatic (*i.e.*, laser) of any color or multichromatic light which can give the appearance of any color, including white light and "black" light. The light generating device can also produce light which in not visible to the naked eye, for example in the ultraviolet or infrared range.

The dispenser can be operably connected to the light generating device, so that the light generating device is activated by motions and/or pressure generated by a consumer during the act of dispensing the edible portion. For example, a consumer may twist or press parts of the dispenser to force the edible portion out of the dispenser. The twisting, pressing or other motions performed by the consumer on the dispenser can close an electronic switch connecting the light generating device to a power source, so that light is produced.

Electronics suitable for use in the light generating device can include a power source box or battery box supported by the dispenser, for containing batteries or other suitable power source. Suitable wires can be used to couple operable components such as switches, PCB and light bulb or LED. These components can be supported by the dispenser. Some or all of the power source can optionally be removable, so that the consumer can replace or renew the power source when desired, for example by replacing batteries.

Alternatively, the light generating device can be activated by an "on-off" switch accessible to the user. In this instance, the generation of light is not necessarily dependent on the dispensing of the edible portion. An "on-off" switch can also be provided which allows power to flow to the electronic components when switched on, but only if a second switch is also closed. Thus, a consumer can switch the device "on" by an accessible "on-off" switch, but no light is generated until the consumer begins to dispense the edible portion. The dispensation of the edible portion closes a second switch, which allows completion of the circuit and generation of light. In this example, when the "on-off" switch is in the "off" position, dispensation of the edible portion will not result in the generation of light.

The accessible "on-off" switch can be any conventional type of switch known in the art, and can also comprise a resistance or touch switch that is closed when contacted by the skin of a consumer (for example when the dispenser is grasped by the consumer). Such switches are known in the art, and are commercially available.

The light generating device can be located anywhere on the dispenser. In one embodiment, the light generating device is located adjacent to the edible portion, and positioned so as to light some or all of the edible portion upon activation. For example, one or more portions of the dispenser can be lighted or adapted to glow by positioning the light generating device adjacent to a transparent or translucent chamber which contains the edible portion.

In another embodiment, the light generating device can be located within the edible portion, so that the edible portion is lighted from within when the light generating device is activated. In still another embodiment, the light generating device is positioned so that the edible portion is lit at it is being dispensed. For example a candy spray can be lit as it is being ejected from the dispenser.

The dispenser can also support electronic components other than, and optionally connected to, any electronic components comprising the light generating device. Such electronic components can be activated along with the light generating device, or can be activated separately. For example, the device can comprise components for the electronic generation of sound. The device can also comprise drive motors activated by the electronics, which move or rotate the edible portion to facilitate consumption.

Electronics suitable for use in the device can include those electronic components discussed above. Suitable wires can be used to couple operable components such as sound generating mechanisms and switches. All electronics in the present device can be powered by a single power source, or can be powered by different power sources.

The dispenser can also be designed to accept attachments, appendages and the like, so that the consumer can decorate or personalize the dispenser. For example, accessories simulating items such as helmets or other headgear; clothing; jewelry; cosmetic dispensers, weapons; personal items such as dolls, toys, canes, cigarette holders, glasses and the like; extra limbs or other body parts; and combinations thereof can be placed onto and supported by the dispenser.

The dispenser can also be designed so that multiple devices of the invention can be fastened together by contacting the appropriate parts of their dispenser. For example, the dispenser can comprise metallic and/or magnetic areas, which magnetically adhere when brought into proximity. The dispenser can also comprise snap- or friction-fittings, locks, hooks or other means by which two or more housings can be joined, as are known in the art. When two or more devices are fastened together, the electronics of one dispenser can be connected to and optionally controlled by the electronics of the other, so that activation of the light generating device comprising one dispenser results in activation of the light generating devices of one or more other dispensers connected to it.

The dispenser can also be designed so that ports or other access means for transmitting and receiving electronic data are provided. Two or more dispenser comprising such access means can share electronic data, for example to transmit computer code for producing a given pattern of light from one dispenser to another. It is understood that the transmission of data may occur over wires or other direct connection between the dispensers, or may occur wirelessly, such as by infrared, light or radiofrequency transmission.

With regard to fastening, mounting, attaching or connecting the components discussed above to the dispenser, unless specifically described otherwise, such are intended to encompass suitable conventional fasteners such as screws, nut and bolt connectors, threaded connectors, snap rings, detent arrangements, clamps such as screw clamps and the like, rivets, toggles, pins and the like, as are known in the art. Components can also be connected by adhesives, glues, welding, ultrasonic welding, and friction fitting or deformation, if appropriate, and appropriate liquid and/or airtight seals or sealing devices can be used, as are known in the art. Electronic portions as discussed above can comprise conventional, commercially available electronic components, connectors and devices such as suitable wiring, connectors, PCBs, microchips, speakers, liquid crystal displays, pressure sensors, liquid level sensors, audio components, inputs, outputs and the like.

The dispenser can be fabricated in any suitable size and shape capable of supporting the edible portion, the light generating device, and any accompanying electronics. For example, the dispenser can be fabricated in the accurately reproduced or stylized shape of a human being or animal (e.g., dog, cat, horse, pig, cow, frog, monkey or ape, lion, or elephant); robot; military vehicle or aircraft; spacecraft; automobile; train; boat or ship; natural or man-made land mark; building; or in a fanciful shape. The dispenser can also be made in the likeness (including a caricature) of actual sports or military figures. The dispenser can also comprise limbs or appendages, wheels, and the like which may move independently. In one embodiment, the dispenser is provided in the shape of a cosmetic dispenser such as a lipstick dispenser, and is capable of operating as such.

The dispenser can comprise one or more colors, designs or indicia, for example for the purpose of decoration or to indicate different group affiliations. Such colors, designs or indicia can be those associated with actual armies, countries, sports teams or sports or military figures.

The dispenser can be any suitable size which allows a consumer to conveniently dispense the edible portion and actuate the light generating device, as can be readily determined by one skilled in the art. All or part of the dispenser can be fabricated from any suitably rigid material, such as heavy gauge paper or cardboard, woods, metals, plastics, rubbers or synthetic resins, as are known in the art, by standard techniques for producing toys and the like. For example, the dispenser can be fabricated by injection molding or other suitable technique from commercially-available material such as thermo plastic polyurethane (TPU); ionomer resin; ethylene vinyl acetate (EVA); thermo plastic styrenics (TPS); melt processible rubber (MPR); thermo plastic vulcanate (TPV); thermo plastic olefin (TPO); thermo plastic ester elastomer (TPEE); thermo plastic elastomer (TPE); thermoplastic rubber (TPR); polypropylene (PP), polyethylene terephthalate (PET), polyvinyl chloride (PVC); acrylonitrile-butadiene-styrene terpolymer (ABS); a polycarbonate and acrylonitrile-butadiene-styrene terpolymer blend (PC/ABS); flexible plastic such as polystyrene sheet or polymethylmethacrylate (PMMA, marketed as "PERSPEX" by ICI Acrylics, Inc.); other acrylics; metal (e.g., stainless steel, aluminum, copper); wood; or any combination thereof. Other suitable materials and forming methods will be apparent to those skilled in the art.

In one embodiment, the edible portion can comprise candy shaped like a lipstick. Prior to dispensing, the lipstick-shaped edible portion is wholly or partially contained within a tubular dispenser. The tubular dispenser is designed to operate as a cosmetic lipstick dispenser as is known in the art; e.g., as described in U.S. Pat. Nos. 4,380,402 and 4,108,558, the entire disclosures of which are herein incorporated by reference. Such dispensers conventionally employ inner and outer coaxial cam sleeves and an inner product carrier having a cam follower received within axial and helical cam slots in the cam sleeves for reciprocating the product carrier between its retracted and extended positions by relative rotation of the cam sleeves. The edible product can be extended manually by the user to any number of fixed or variable positions from fully retracted to fully extended.

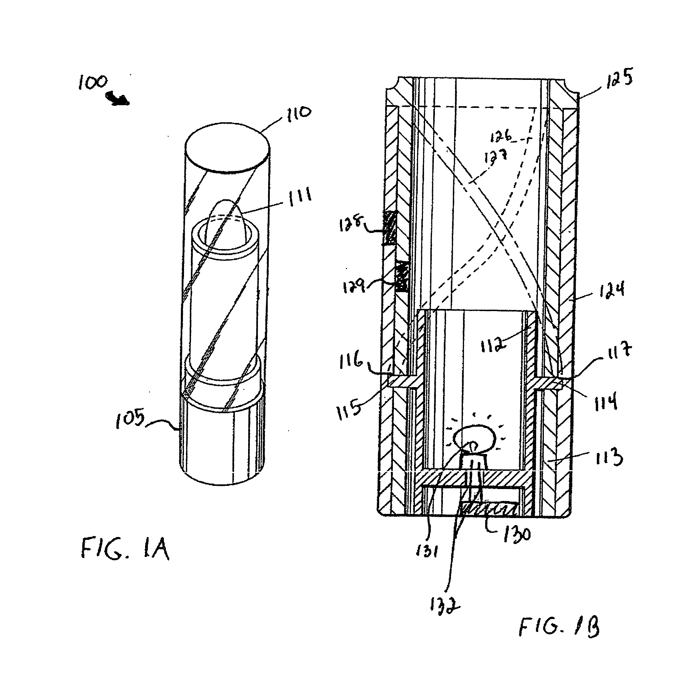

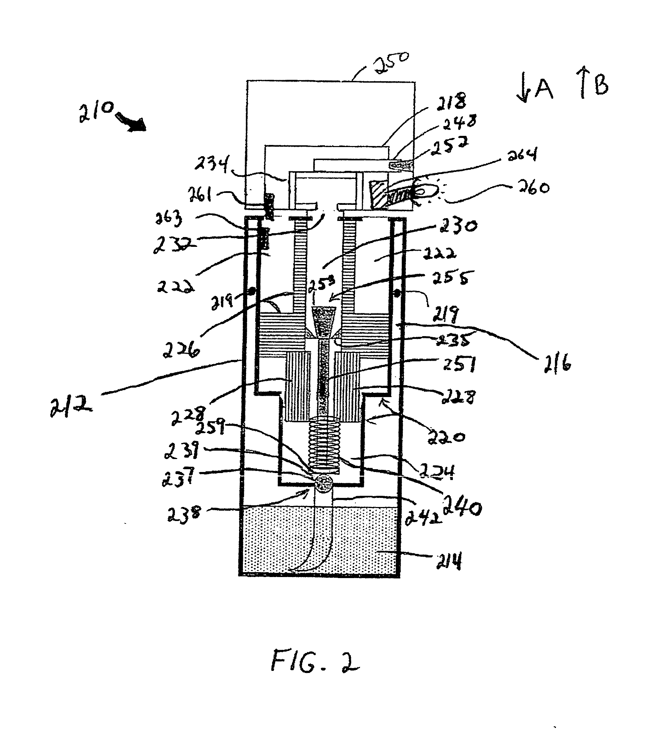

For example, as shown in Figs. 1A a suitable candy lipstick dispenser **100** can comprise a holder **105** for the edible portion **111,** which comprises a cylindrical elevator cup **112** mounted for longitudinal or vertical movement in an inner cylinder or sleeve **113.** The dispenser can optionally comprise a clear cap **110.** With reference to Fig. 1B**,** projecting from the outer cylindrical surface of the cup are a pair of diametrically opposed lugs or drift-pins **114** and **115** which are adapted to pass through a pair of diametrically opposed slots **116** and **117** formed in the side wall of the inner sleeve. (In Fig. 2B, the edible portion **111** is not represented to better illustrate the dispenser.) In order to move the cup to a desired position there is a cylindrical outer sleeve **124** capable of rotation about the inner sleeve and retained axially by the shoulder **125** on the inner sleeve. In the inner surface of the cylindrical wall of the outer sleeve are two diametrically opposed helicoidal grooves **126** and **127** which are engaged by the ends of the lugs to provide longitudinal motion to the cup.

A switch is disposed in the dispenser, with a first plate **128** located on the inside surface of outer sleeve **124,** and a second plate **129** located on the outside surface of inner sleeve **113.** Rotation of the outer sleeve about the inner sleeve to dispense the edible portion brings the two plates of the switch into contact, closing the circuit and allowing power to flow from power source **130** to light generating device **131** mounted on elevator cup **112** through wires **132.** The switch is connected to the power source by wires (not shown).

In another embodiment, the edible portion can comprise liquid candy which is contained within a dispenser comprising a reservoir and a means for ejecting the liquid candy as a spray. A flow device has an inlet coupled to the reservoir, which causes the liquid candy to flow from the inlet to an outlet of the flow device. Referring to Fig. 2, an illustrative dispenser **210** is shown in accordance with one embodiment of the present invention. Dispenser **210** includes a reservoir, which is preferably formed from a translucent material to reveal the contents of reservoir **212.** In other embodiments, reservoir **212** may include colored opaque materials. Reservoir **212** can be formed in a plurality of shapes and sizes; for example, in the form of a notorious cartoon character, in the shape of a toy gun, etc.

Reservoir **212** stores liquid candy **214,** which can comprise juice, colored or flavored water or the like. In one embodiment, liquid candy **214** can be in a solid form or a powdered solid form, which can be heated or combined with a liquid (such as, water) to create a liquid form. The liquid form can then be dispensed in accordance with the invention.

A pump assembly **216** is provided in the dispenser which mounts on reservoir **212,** for example by employing a threaded or snap-on arrangement. A seal **219** can be employed between reservoir **212** and pump assembly **216.** In the embodiment shown in Fig. 2, pump assembly **216** provides a flow device, which includes a piston and cylinder arrangement. Other types of flow devices such as propellers or other devices can be employed, which can create a flow by creating a pressure differential.

To take advantage of both a downward and upward stroke of a nozzle cap **218,** a cylinder **220** is included to form first and second concentric bores **222** and **224.** First bore **222** is dimensioned and configured to receive a first piston **226** for liquid, and a second bore **224** is dimensioned and configured to receive a second piston **228.** First and second pistons **226** and **228** are connected to each other, and first piston **226** is connected to nozzle cap **218.** When nozzle cap **218** is depressed by a user, nozzle cap **218** and first and second pistons **226** and **228** move in unison downward into first and second bores **222** and **224** of cylinder **220.** First piston **226** moves in bore or cylinder **222,** causing a volume increase above first piston **226** and a volume decrease below first piston **226** to drive liquid candy **214** through a center tube **230.** At the same time, liquid candy **214** (which was previously drawn into bore **224)** undergoes a decrease in volume also to force liquid candy **214** through center tube **230.** Center tube **230** includes an outlet **232,** which is located beyond second piston **228,** such that the pumping action of first and second pistons **226** and **228** passes liquid candy **214** through outlet **232.** The liquid candy **214** can pass through a chamber **234** before traveling through conduit **248** and exiting via orifice **252.** A one-way valve **238** is provided at an inlet **239** to cylinder **222.** Valve **238** may include a ball **237** or other device which permits liquid to flow into cylinder **222** from the reservoir **212** through a siphon or dip tube **242,** but prevents flow back into reservoir **212** when nozzle **218** and first and second pistons **226** and **228** are depressed.

Upon releasing nozzle cap **218,** a return action is provided by a biasing device **240** which may include, for example, a spring or an elastic material, to restore nozzle cap **218** and first and second pistons **226** and **228** to a first position. Biasing device **240** is captured between piston **228** and an end portion **259** or a rod **251.** Biasing device **240** maintains valve **238** in a sealed position to prevent backflow of liquid **214** into reservoir **212** when liquid **214** is being drawn through center tube **230** (e.g., when nozzle **218,** and first and second pistons **226** and **228** are moved down in the direction of arrow "A"). The return action of nozzle **218** and first and second pistons **226** and **228** in the direction of arrow "B" is provided by biasing device **240,** which causes valve **238** to open and draw liquid candy **214** into cylinder **224** from reservoir **212.** A valve **255** includes rod **251,** which is disposed in center tube **230.** Rod **251** includes a sealing end portion **253.** Sealing end portion **253** provides a seal when nozzle cap **218** and first and second pistons **226** and **228** are released (to draw liquid into cylinder **224)** but is opened to permit flow when nozzle cap **218** and first and second pistons **226** and **228** are depressed. Rod **251** may be biased by biasing device **240** to ensure a seal is provided. A surface **235** is provided, which is attached in center tube **230** to provide a sealing surface for sealing end **253.**

This liquid in cylinder **224** is thus dispensed by successive depressions of nozzle cap **218.** Nozzle cap **218** is preferably adapted to be pumped by a finger, and includes an orifice **248** for delivering foam candy in accordance with the invention. A cap **250** and/or a stopper **252** may be employed to prevent dispensing of foam when apparatus **210** is not in use.

A light generating device **260** is mounted adjacent to orifice **252** and is positioned to light the spray of liquid candy as it exits the orifice. The angle of light generating device **260** relative to the direction of liquid candy spray exiting orifice **252** can be adjusted either by the manufacturer or the consumer to optimize the lighting effect. A switch is disposed in the dispenser, with a first plate **261** mounted on nozzle cap **218** and a second plate **263** located on that portion of dispenser **210** supporting the nozzle cap. Depression of nozzle cap **218** the two plates of the switch into contact, closing the circuit and allowing power to flow from power source **264** which is operably connected to light generating device **260.** The switch is connected to the power source by wires (not shown).

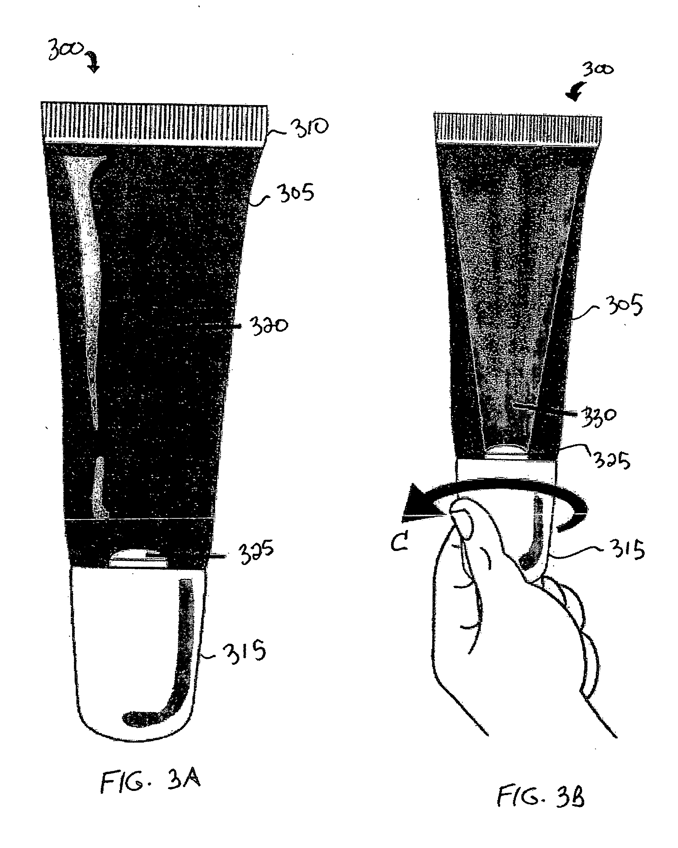

Figs. 3A and 3B show a further exemplary light generating product **300,** which comprises a flexible (for example plastic) generally tubular or flattened tubular container **305** with a crimped end **310** and a cap **315** covering an orifice for dispensing the edible portion **320.** The edible portion can comprise a confection, for example, candy gel, liquid candy or candy foam. A light generating device **325** is located inside container **305** adjacent to cap **315,** and may be supported by the cap. When cap **315** is twisted to open (see arrow C) and dispense the edible product **320,** the light generating device **325** is activated a produces light **330.**

The invention further relates to a method of marketing a light generating edible product of the invention. The marketing method involves packaging a light generating edible product as described above with at least one additional item for sale, such as a confection, stickers, other electronic items, and promotional items such as contests or lotteries and team or league paraphernalia. To assist the user in properly operating the product, instructions on how to use the product and/or replace or change components of the product can also be included.

While the present invention has been described in connection with the examples discussed above and the various figures, it is to be understood that other similar examples may be used, or modifications or additions may be made to the described examples for performing the same function of the present invention without deviating therefrom. Therefore, the present invention should not be limited to any single example, but rather should be construed in breadth and scope in accordance with the recitation of the appended claims.

## Claims

1. A light generating edible product, comprising:
a edible portion; and
a dispenser comprising a light generating device,
wherein the light generating device is activated upon dispensing of the edible portion.

2. The product of claim 1, wherein the edible portion comprises a confection.

3. The product of claim 1, wherein the dispenser comprises inner and outer coaxial cam sleeves and an inner product carrier for receiving the confectionary portion, wherein the inner product carrier comprises a cam follower received within axial and helical cam slots in the cam sleeves for reciprocating the inner product carrier between its retracted and extended positions by relative rotation of the cam sleeves.

4. The product of claim 2, wherein the confection has a lipstick shape.

5. The product of claim 1, wherein the light generating device is mounted on the inner product carrier and lights the confectionary portion from within the confectionary portion when activated.

6. The product of claim 1, wherein the dispenser comprises a reservoir, the edible portion comprises liquid candy or potable liquid which is contained within the reservoir, and the dispenser further comprises an apparatus for ejecting the liquid candy or potable liquid as a spray.

7. The product of claim 6, wherein the light generating device is located adjacent to the apparatus for ejecting the liquid candy or potable liquid as a spray.

8. The product of claim 1, wherein the light generating device is activated by an on-off switch accessible to a user.

9. The product of claim 8, wherein the on-off switch comprises a skin resistance switch or a touch switch.

10. The product of claim 1, further comprising a mechanism for producing sound.

11. The product of claim 1, wherein the dispenser can transmit, receive or store electronic data.

12. The product of claim 2, wherein the confection is selected from the group consisting of hard candies; mints; cough drops and throat drops; lozenges; gum; lollipop heads; low boiled candy; hard boiled candy; coated candy; rock candy; milk, dark and white chocolate; taffy; powdered candies; edible films; jelly beans; liquid candy, candy gel, and candy foam.

13. A light generating edible product comprising a dispenser and a light generating device, wherein the dispenser comprises inner and outer coaxial cam sleeves and an inner product carrier for receiving the edible portion, wherein the inner product carrier comprises a cam follower received within axial and helical cam slots in the cam sleeves for reciprocating the inner product carrier between its retracted and extended positions by relative rotation of the cam sleeves.

14. A method of marketing an edible product, comprising
(1) providing a food in combination with a light generating device to create a light generating edible product of claim 1; and
(2) distributing the light generating edible product to a user, optionally in combination with an additional item.

15. The method of claim 14, wherein the food comprises a confection.

16. The method of claim 14, wherein the additional item is selected from the group consisting of instructions on how to use the device; toys; confections; stickers; electronic items; promotional items; and additional sound generating devices.
